# FASCICULE DE BREVET EUROPEEN

(11) **EP 2 279 620 B1**
(45) Date de publication et mention de la délivrance du brevet: **07.08.2019**
(21) Numéro de dépôt: 09742264.6
(22) Date de dépôt: 07.04.2009
(51) Int. Cl.: H04N 19/105, H04N 19/11, H04N 19/119, H04N 19/147, H04N 19/159, H04N 19/176, H04N 19/182, H04N 19/19, H04N 19/57, H04N 19/593, H04N 19/61, H04N 19/60, H04N 19/70

(54) **PREDICTION D'IMAGES PAR DETERMINATION PREALABLE D'UNE FAMILLE DE PIXELS DE REFERENCE, CODAGE ET DECODAGE UTILISANT UNE TELLE PREDICTION**
BILDPRÄDIKTION DURCH VORHERIGE BESTIMMUNG EINER REFERENZPIXELFAMILIE, KODIERUNG UND DEKODIERUNG UNTER VERWENDUNG EINER SOLCHEN PRÄDIKTION
PREDICTION OF IMAGES BY PRIOR DETERMINATION OF A FAMILY OF REFERENCE PIXELS, CODING AND DECODING USING SUCH A PREDICTION

(30) Priorité: 15.04.2008 FR 0852531
(43) Date de publication de la demande: 02.02.2011
(73) Titulaire: Orange, 75015 Paris (FR)
(72) Inventeur: JUNG, Joël, F-78320 Le Mesnil Saint Denis (FR); LAROCHE, Guillaume, F-75015 Paris (FR)
(86) Numéro de dépôt international: PCT/FR2009/050601
(87) Numéro de publication internationale: WO 2009/136066

(56) Documents cités:
- EP-A- 0 895 424
- EP-A- 1 761 063
- WO-A-2008/016605
- WIEGAND T ET AL: "Overview of the H.264/AVC Video Coding Standard" IEEE TRANSACTIONS ON CIRCUITS AND SYSTEMS FOR VIDEO TECHNOLOGY, IEEE SERVICE CENTER, PISCATAWAY, NJ, US, vol. 13, no. 7, juillet 2003 (2003-07), pages 560-576, XP011099249 ISSN: 1051-8215
- HUNG E M ET AL: "On Macroblock Partition for Motion Compensation" PROCEEDINGS OF THE 2006 IEEE INTERNATIONAL CONFERENCE ON IMAGE PROCESSING (ICIP 2006), 1 octobre 2006 (2006-10-01), pages 1697-1700, XP031048982 IEEE, Piscataway, NJ, US ISBN: 978-1-4244-0480-3
- SULLIVAN G J ET AL: "Rate-Distrotion Optimization for Video Compression" IEEE SIGNAL PROCESSING MAGAZINE, vol. 15, no. 6, 1 novembre 1998 (1998-11-01), pages 74-90, XP011089821 IEEE, Piscataway, NJ, US ISSN: 1053-5888 cité dans la demande

## Description

### Arrière-plan de l'invention

La présente invention se rapporte de manière générale au domaine du traitement d'images, et plus précisément au codage et au décodage d'images numériques et de séquences d'images numériques.

Les images et séquences d'images numériques sont connues pour occuper beaucoup d'espace mémoire, ce qui nécessite, lorsqu'on transmet ces images, de les compresser afin d'éviter les problèmes d'encombrements sur le réseau de communication utilisé pour cette transmission, le débit utilisable sur celui-ci étant généralement limité.

La norme H.264/MPEG-4 AVC (d'après l'anglais "Advanced Video Coding"), telle que présentée dans le document ISO/IEC 14496-10, décrit notamment une technique selon laquelle des groupes de pixels, appelés blocs ou macroblocs, d'une image courante sont prédits spatialement par rapport à d'autres blocs ou macroblocs appartenant à la même image. C'est ce qu'on appelle le codage en Intra ("Intra-frame-coding"). Après ce codage prédictif, les blocs de pixels sont transformés, puis quantifiés. Les coefficients des blocs de pixels quantifiés sont ensuite parcourus dans un ordre de lecture permettant d'exploiter le nombre important de coefficients nuls dans les hautes fréquences, puis sont codés par un codage entropique.

Plus précisément, lors du codage prédictif d'un macrobloc conformément à la norme précitée, à l'exception d'un macrobloc de type 16x16, le macrobloc est généralement découpé selon une pluralité de partitions ayant généralement la forme de blocs de plus petite taille et dont le contour est rectangulaire ou carré. La prédiction spatiale d'un tel macrobloc dans une image consiste à prédire chaque bloc de plus petite taille formant ce macrobloc par rapport à un ou plusieurs blocs d'un autre macrobloc de cette même image, appelé macrobloc de référence. Cette prédiction n'est possible que si le macrobloc de référence avoisine le macrobloc à prédire et se trouve dans certaines directions prédéterminées par rapport à celui-ci, c'est-à-dire généralement au dessus et à gauche, dans un voisinage dit "causal".

Ainsi par exemple, dans le cas d'un macrobloc de type 16x16, la prédiction des pixels qui sont situés en bas, à droite de ce macrobloc est nécessairement effectuée par rapport à des pixels de référence qui sont situés au-dessus et à gauche du macrobloc. De tels pixels de référence sont très éloignés spatialement des pixels à prédire.

La précision d'un tel type de prédiction n'est donc pas optimisée, surtout dans le cas de macroblocs ayant une activité spatiale élevée, c'est-à-dire dans le cas où l'image à coder présente de nombreux détails.

En outre, un tel type de prédiction manque de souplesse car pour prédire les pixels d'une même partition, il impose de choisir:
- des pixels de référence toujours regroupés sous la forme d'un bloc ou macrobloc et ayant souvent le même nombre, ces pixels de référence n'étant pas forcément adaptés pour prédire des partitions ayant une forme différente de celle d'un rectangle ou d'un carré,
- toujours le ou les mêmes pixels de référence quelle que soit la partition courante à prédire, pour un mode de prédiction prédéterminé,
- toujours la ou les mêmes partitions de référence, dont l'éloignement spatial élevé par rapport à certains des pixels de la partition à prédire peut nuire à la précision de la prédiction,
- toujours la ou les mêmes directions de prédiction, sans tenir compte du positionnement particulier de chaque pixel de la partition à prédire.

Le document Wiegand T. et al: "Overview of the H.264/AVC Video Coding Standard", IEEE Transactions on Circuits and Systems for Video Technology, IEEE Service Center, Piscataway, NJ, US, vol. 13, no. 7, juillet 2003 (2003-07), pages 560-576, ISSN: 1051-8215 décrit le codage vidéo selon la norme H.264/AVC.

La présente invention vise à résoudre les inconvénients de la technique antérieure en fournissant un procédé et un dispositif de prédiction qui permet, pour chaque pixel à prédire, une personnalisation de sa prédiction, dans le but d'optimiser la précision de la prédiction de chaque pixel.

### Objet et résumé de l'invention

A cette fin, l'invention propose un procédé de prédiction de partitions d'au moins un groupe de pixels dans une image à coder, par rapport à un groupe de pixels de référence, le groupe de pixels étant obtenu par calcul d'une fonction caractéristique d'un mode de prédiction prédéterminé, les pixels de référence du groupe obtenu étant susceptibles de varier d'une partition à l'autre. L'invention est définie par les revendications annexées; les exemples appelés "caractéristiques avantageuses" sont des exemples illustratifs.

Une telle prédiction de partitions de pixels est ainsi avantageusement basée sur une règle qui détermine précisément une famille ou groupe de pixels de référence à utiliser, et le nombre de pixels de cette famille à utiliser pour la prédiction de chaque pixel. En conséquence, la prédiction de chaque pixel d'une partition courante à prédire est variable, en ce sens que les pixels de référence utilisés pour prédire un pixel courant peuvent être différents de ceux qui ont servi à prédire le pixel précédent, si ce n'est que les pixels de référence précités répondent tous à un même mode de prédiction. Il en résulte qu'une telle prédiction est effectuée indépendamment du nombre de pixels d'un groupe de pixels de référence et de la forme selon laquelle les pixels de référence sont regroupés, ce qui permet d'obtenir une prédiction beaucoup plus précise que les prédictions Intra classiques.

Selon une caractéristique avantageuse, lorsqu'une partition à prédire contient un contour qui prolonge un contour de référence, un mode de prédiction est défini par le choix, pour au moins un pixel à prédire situé dans une position déterminée par rapport au contour de la partition à prédire, d'au moins un pixel de référence situé dans la même position que ledit pixel à prédire, par rapport au contour de référence.

Une telle prédiction s'appuie sur des pixels de référence obtenus par une fonction qui prend en compte les contours contenus dans des blocs ou macroblocs de référence. Autrement dit, la fonction précitée détermine les pixels les plus proches dans un voisinage "sémantiquement" identique, ce qui permet d'obtenir une prédiction particulièrement performante.

Selon une autre caractéristique avantageuse, le mode de prédiction est défini par le choix, pour au moins un pixel d'une partition à prédire, d'au moins un pixel de référence qui sépare le pixel à prédire d'une distance prédéterminée.

Un tel mode de prédiction permet ainsi de déterminer de façon simple et sans aucun autre critère supplémentaire, un nombre adéquat de pixels de référence situés par exemple au voisinage le plus proche du pixel à prédire, de façon à prédire ce pixel le plus précisément possible.

Selon encore une autre caractéristique avantageuse, un mode de prédiction est défini par le choix, pour au moins un pixel d'une partition à prédire, d'au moins un pixel de référence situé dans une direction prédéterminée, par rapport au pixel à prédire.

Selon encore une autre caractéristique avantageuse, la partition de pixels à prédire a une taille et une forme quelconques, ce qui rend le procédé selon l'invention particulièrement adaptable à tout type de partitionnement de macroblocs à prédire.

L'invention concerne aussi un procédé de codage d'une image ou d'une séquence d'images, un procédé de décodage d'un flux de données représentatif d'une image ou d'une séquence d'images, un signal porteur d'un flux de données représentatif d'une image ou d'une séquence d'images, un dispositif de prédiction de partitions d'au moins un groupe de pixels dans une image à coder, un dispositif de codage d'une image ou d'une séquence d'images, un dispositif de décodage d'un flux de données représentatif d'une image ou d'une séquence d'images et un programme d'ordinateur selon les revendications annexées.

### Brève description des dessins

D'autres caractéristiques et avantages apparaîtront à la lecture de modes de réalisation préférés décrits en référence aux figures dans lesquelles:
- la figure 1 représente des étapes du procédé de codage selon l'invention,
- la figure 2 représente un mode de réalisation d'un dispositif de codage selon l'invention,
- la figure 3 représente différentes formes de partitions susceptibles d'êtres sélectionnées dans le dispositif de codage selon l'invention,
- la figure 4 représente des macroblocs partitionnés suite à la sélection des différentes partitions initiales représentées à la figure 3,
- la figure 5 représente deux modes de prédiction susceptibles de caractériser la fonction de prédiction selon l'invention,
- la figure 6 représente le macrobloc partitionné de la figure 4B, qui a été prédit selon un mode de prédiction représenté figure 5,
- la figure 7 représente le macrobloc partitionné de la figure 4C, qui a été prédit selon un mode de prédiction représenté figure 5,
- la figure 8 représente une première variante de la prédiction de la figure 7,
- la figure 9 représente une seconde variante de la prédiction de la figure 7,
- la figure 10 représente un mode de prédiction supplémentaire susceptible de caractériser la fonction de prédiction selon l'invention,
- la figure 11 représente la structure d'un macrobloc codé par le dispositif de codage selon l'invention,
- la figure 12 représente un dispositif de décodage selon l'invention,
- la figure 13 représente des étapes du procédé de décodage selon l'invention.

### Description détaillée d'un mode de réalisation

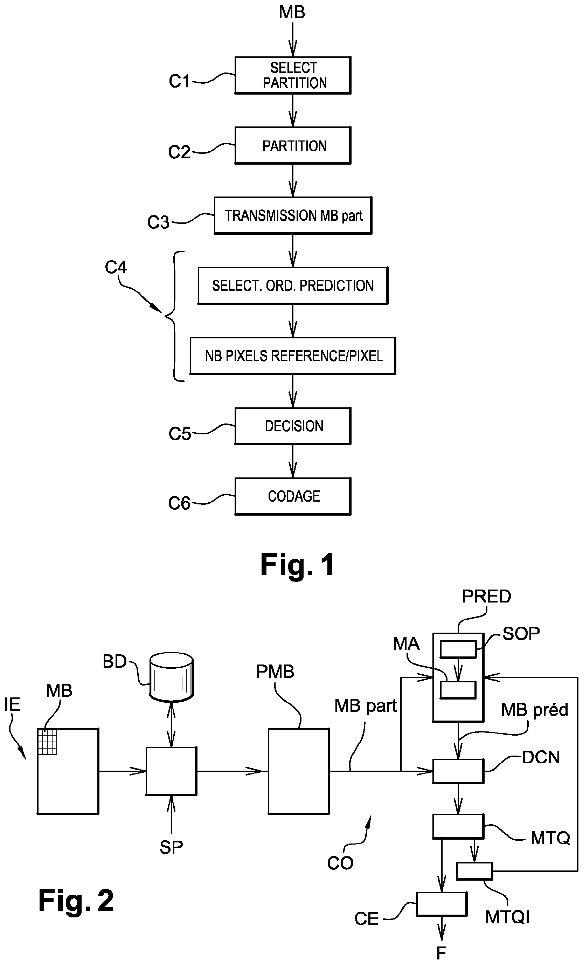

Un mode de réalisation de l'invention va maintenant être décrit, dans lequel le procédé de codage selon l'invention est utilisé pour coder une séquence d'images selon un flux binaire proche de celui qu'on obtient par un codage selon la norme H.264/MPEG-4 AVC. Dans ce mode de réalisation, le procédé de codage selon l'invention est par exemple implémenté de manière logicielle ou matérielle par modifications d'un codeur initialement conforme à la norme H.264/MPEG-4 AVC. Le procédé de codage selon l'invention est représenté sous la forme d'un algorithme comportant des étapes C1 à C6, représentées à la **figure 1****.**

Il est à noter que le procédé de décodage selon l'invention est symétriquement implémenté de manière logicielle ou matérielle par modifications d'un décodeur initialement conforme à la norme H.264/MPEG-4 AVC.

Selon le mode de réalisation de l'invention, le procédé de codage selon l'invention est implémenté dans un dispositif de codage CO représenté à la **figure 2****.** Le codage effectué par le codeur CO est de type Intra.

La première étape C1, représentée à la **figure 1****,** est la sélection, pour un macrobloc appartenant à une image IE de la séquence d'images à coder, d'une partition de pixels particulière plus petite choisie dans un ensemble prédéterminé de partitions de forme prédéterminée. Pour cela, un macrobloc MB appartenant à l'image IE, par exemple de taille 8x8, est appliqué en entrée d'un module SP de sélection de partitions, représenté à la **figure 2****.**

Ce module SP de sélection de partitions utilise par exemple une méthode de choix par compétition exhaustive ou bien encore une méthode de choix à l'aide d'un algorithme avec à-priori. De telles méthodes sont bien connues de l'homme du métier (cf: G.J. Sullivan and T.Wiegand, "Rate-distortion optimization for video compression", IEEE Signal Proc. Mag., pp.74-90, 1998). Elles ne seront donc pas décrites plus avant.

Lesdites partitions sont regroupées dans une base de données BD du codeur CO. De telles partitions peuvent être de forme rectangulaire ou carrée ou bien d'autres formes, telles que par exemple des formes sensiblement linéaires.

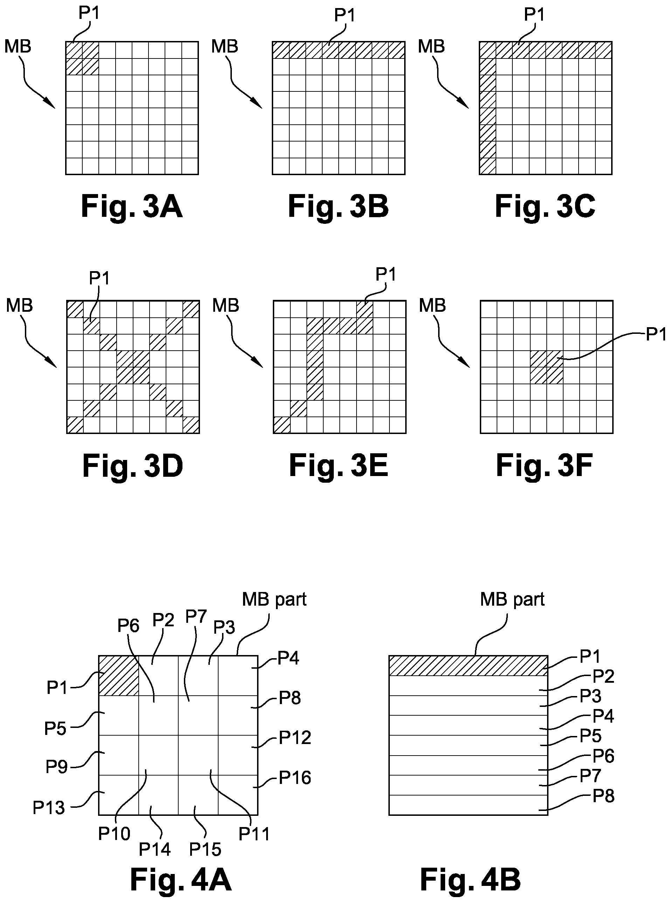

Différentes partitions d'un macrobloc, par exemple de taille 8x8, susceptibles d'être sélectionnées par le module de sélection SP, sont représentées à titre d'exemples non limitatifs sur la **figure 3****.**

La figure 3A représente partition initiale P1 ayant la forme d'un carré.

La figure 3B représente une partition initiale P1 ayant la forme d'une ligne.

La figure 3C représente une partition initiale P1 ayant la forme d'un "L".

La figure 3D représente une partition initiale P1 ayant la forme d'une croix.

La figure 3E représente une partition initiale P1 ayant la forme d'une ligne brisée contenant des segments verticaux, horizontaux et diagonaux.

La figure 3F représente une partition initiale P1 ayant la forme d'une ligne brisée dont les deux extrémités se rejoignent de façon à former un point. Une telle ligne brisée est par exemple déterminée par le gradient d'un macrobloc situé à la même position dans une image précédente (colocalisé).

L'étape suivante C2 représentée à **la** **figure 1** est le découpage du macrobloc MB selon une partition initiale P1 choisie, telle que l'une de celles représentées à la figure 3, en n partitions P1, P2,..., Pn. Un tel découpage est effectué par un module PMB de partitionnement de macroblocs représenté à **la** **figure 2** qui utilise un algorithme de partitionnement.

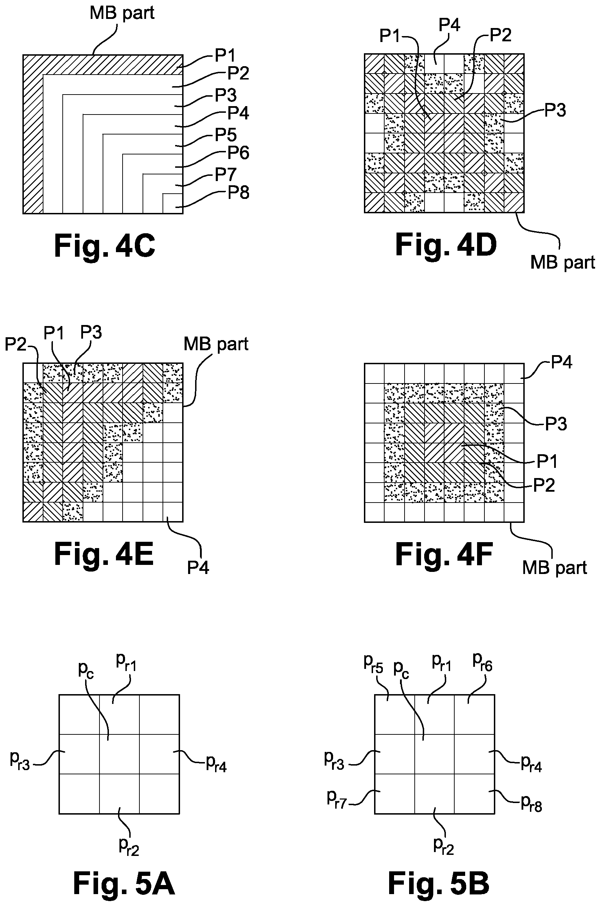

**La** **figure 4** représente les macroblocs MBpart qui ont été obtenus après découpage selon les partitions initiales P1 représentées à **la** **figure 3****.**

Comme on peut le constater, l'algorithme de partitionnement précité est conçu de façon à ce que les partitions P1,...., Pn ainsi obtenues :
- ne se chevauchent pas dans le macrobloc MBpart,
- et n'ont pas nécessairement le même nombre de pixels et la même forme que la partition P1 initiale.

La figure 4A représente un macrobloc partitionné MBpart comprenant seize partitions P1,..., P16, ayant toutes la forme d'un carré et le même nombre de pixels.

La figure 4B représente un macrobloc partitionné MBpart comprenant huit partitions P1...P8, ayant toutes la forme d'une ligne et le même nombre de pixels.

La figure 4C représente un macrobloc partitionné MBpart comprenant huit partitions P1...P8, ayant toutes la forme d'un "L", sauf la dernière partition P8, mais chacune un nombre différent de pixels.

La figure 4D représente un macrobloc partitionné MBpart comprenant quatre partitions P1...P4, ayant quasiment toutes la forme d'une croix mais un nombre différent de pixels.

La figure 4E représente un macrobloc partitionné MBpart comprenant quatre partitions P1...P4 ayant quasiment toutes la forme d'une ligne brisée contenant des segments verticaux, horizontaux et diagonaux, mais chacune un nombre différent de pixels.

La figure 4F représente un macrobloc partitionné MBpart comprenant quatre partitions P1 ...P4 ayant toutes la forme d'une ligne brisée dont les deux extrémités se rejoignent, mais chacune un nombre différent de pixels.

A la suite de l'étape de partitionnement C2, au cours d'une étape C3 représentée à **la** **figure 1****,** le module de partitionnement PMB transmet le macrobloc MBpart qui vient d'être partitionné à un module de calcul de prédiction PRED représenté à **la** **figure 2****.**

Au cours d'une étape C4 représentée à **la** **figure 1****,** le module de calcul de prédiction PRED calcule différentes prédictions possibles du macrobloc partitionné MBpart reçu. Compte tenu du fait que le codeur CO est de type Intra, le module de calcul de prédiction PRED calcule les prédictions spatiales possibles de chaque partition P1,..., Pn du macrobloc MBpart, par rapport à au moins la dernière partition précédemment codée puis décodée.

De façon particulièrement avantageuse, le module de calcul de prédiction PRED prédit les partitions du macrobloc MBpart l'une après l'autre, une partition courante à prédire étant prédite en référence à au moins une partition qui la précède immédiatement et qui a été codée puis décodée, de façon à servir par la suite de partition de référence.

Ainsi, la distance de prédiction est minimisée, puisque la prédiction d'une partition se fait par rapport à des pixels de référence situés à proximité des pixels de ladite partition à prédire.

En référence à **la** **figure 2****,** une telle partition de référence est codée conformément à la norme H.264/MPEG-4AVC, c'est-à-dire qu'elle subit, de façon connue en soi:
- un codage par transformée en cosinus discrète et quantification qui est effectué par un module MTQ de transformée et de quantification,
- puis un décodage par transformée en cosinus discrète inverse et quantification inverse, lequel est effectué par le module MTQI de transformée et de quantification inverse.

Dans le mode de réalisation décrit, différents types de prédictions spatiales sont envisagés qui correspondent respectivement à des ordres de parcours différents des partitions, dans lesquels le module de calcul de prédiction PRED a la possibilité de prédire les partions P1,..., Pn d'un macrobloc partitionné MBpart. En d'autres termes, le module de calcul de prédiction PRED a la possibilité de prédire les partitions P1...Pn l'une après l'autre, dans l'ordre où ces dernières ont été propagées ou bien dans des ordres différents. A cet effet, en référence à **la** **figure 2****,** le module de calcul de prédiction PRED comprend un module de sélection d'ordre de parcours SOP des partitions à prédire.

Suite à la sélection précitée, et toujours au cours de l'étape de prédiction C4, un module logiciel MA calcule, pour chaque pixel d'une partition courante Pj à prédire (1≤j≤n), une fonction qui détermine un nombre de pixels de référence utiles par rapport auquel chaque pixel considéré est destiné à être prédit. De tels pixels de référence utiles sont des pixels qui sont conformes à un ou plusieurs modes de prédiction fixés préalablement.

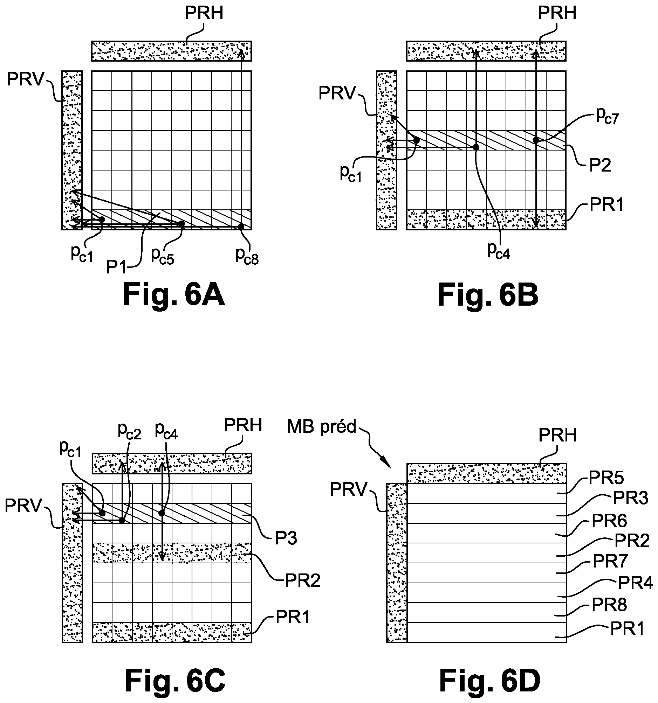

Dans les exemples de prédiction qui vont être décrits ci-dessous en référence **aux** **figures 6 à 9****,** les pixels de référence utiles sont ceux qui sont situés à une distance prédéterminée du pixel courant à prédire, en particulier au voisinage le plus proche de ce dernier. Le choix d'un tel mode de prédiction permet ainsi de réduire au maximum la distance de prédiction entre un pixel courant p_{c} à prédire et le ou les pixels de référence, dans le but d'affiner davantage la précision de la prédiction et donc, du codage.

De façon particulièrement avantageuse, le mode de prédiction précité constitue une caractéristique d'une fonction mathématique apte à déterminer un nombre prédéterminé de pixels de référence considérés comme étant situés au voisinage le plus proche du pixel courant à prédire. C'est cette fonction qui est calculée par le module logiciel MA.

**La** **figure 5** illustre deux représentations mathématiques possibles du mode de prédiction précité qui définissent, pour chaque pixel à prédire, la position et le nombre des pixels de référence à considérer comme étant situés au voisinage le plus proche du pixel à prédire.

Dans l'exemple représenté à la figure 5A, la fonction mathématique est définie au préalable pour déterminer systématiquement, pour chaque pixel courant p_{c} à prédire, un nombre de pixels de référence utiles, par exemple les quatre pixels de référence listés ci-dessous:
- le pixel de référence pᵣ₁ situé au voisinage le plus proche juste au-dessus du pixel courant p_{c} ;
- le pixel de référence pᵣ₂ situé au voisinage le plus proche juste en-dessous du pixel courant p_{c} ;
- le pixel de référence pᵣ₃ situé au voisinage le plus proche à gauche du pixel courant p_{c}, selon une direction horizontale ;
- le pixel de référence pᵣ₄ situé au voisinage le plus proche à droite du pixel courant p_{c}, selon une direction horizontale.

Selon une autre alternative représentée à la figure 5B, la fonction mathématique est définie au préalable pour déterminer, pour chaque pixel courant p_{c} à prédire, quatre pixels de référence supplémentaires listés ci-dessous :
- le pixel de référence pᵣ₅ situé au voisinage le plus proche du pixel courant p_{c}, dans la direction diagonale supérieure gauche ;
- le pixel de référence pᵣ₆ situé au voisinage le plus proche du pixel courant p_{c}, dans la direction diagonale supérieure droite ;
- le pixel de référence pᵣ₇ situé au voisinage le plus proche du pixel courant p_{c}, dans la direction diagonale inférieure gauche ;
- le pixel de référence pᵣ₈ situé au voisinage le plus proche du pixel courant p_{c}, dans la direction diagonale inférieure gauche.

On va maintenant décrire, en référence à **la** **figure 6****,** un exemple de prédiction, qui est basé sur le critère de voisinage le plus proche qui vient d'être mentionné.

On suppose, dans cet exemple, que:
- chaque macrobloc partitionné MBpart à prédire est celui de la figure 4B, c'et à dire découpé en huit partitions P1,..., P8 ayant la forme de lignes,
- le module de sélection d'ordre de parcours SOP de partitions a sélectionné un ordre de parcours qui diffère de l'ordre dans lequel les partitions P1 à P8 ont été propagées,
- la fonction mathématique, qui est destinée à être calculée par le module logiciel MA, est définie comme à la figure 5B, avec un nombre de pixels de référence fixé systématiquement à deux, pour chaque pixel courant p_{c} à prédire.

Plus précisément, le module de calcul de prédiction PRED de **la** **figure 2** parcourt de la gauche vers la droite une première ligne du macrobloc MBpart représenté figure 4B qui est destinée à être affectée à la prédiction de la partition initiale P1. La première ligne choisie correspond à la dernière ligne du macrobloc MBpart. Le module logiciel MA calcule alors, pour chaque pixel de ladite partition P1 à prédire, une fonction qui détermine les deux pixels de référence qui sont situés au voisinage le plus proche du pixel courant à prédire.

Concrètement, pour chaque pixel de la partition P1 à prédire, la fonction mathématique détermine à partir des huit pixels de référence modélisés comme à la figure 5B et qui sont susceptibles d'être sélectionnés, les deux pixels de référence pour lesquels la distance qui sépare chacun de ces derniers du pixel courant à prédire a été estimée comme étant la plus faible en comparaison des distances qui ont été estimées pour les six autres pixels de référence.

La figure 6A représente les deux pixels de référence déterminés par la fonction mathématique précitée, dans le cas uniquement de la prédiction des premier, cinquième et huitième pixels de la partition P1, ceci dans un souci de clarté du dessin.

On constate ainsi que :
- le premier pixel p_{c1} de la partition P1 est prédit par rapport à deux pixels de référence appartenant à la partition de référence verticale PRV d'un macrobloc voisin (non représenté), laquelle ayant été codée, puis décodée, comme expliqué précédemment : ces deux pixels de référence ont été déterminés comme étant respectivement le pixel de référence situé au voisinage le plus proche du pixel courant p_{c1}, dans la direction diagonale supérieure gauche, et le pixel de référence situé au voisinage le plus proche à gauche du pixel courant p_{ci}, selon une direction horizontale;
- le cinquième pixel p_{c5} de la partition P1 est prédit par rapport à deux pixels de référence appartenant également à la partition de référence verticale PRV précitée: ces deux pixels de référence ont été déterminés comme étant respectivement le pixel de référence situé au voisinage le plus proche du pixel courant p_{c1}, dans la direction diagonale supérieure gauche, et le pixel de référence situé au voisinage le plus proche à gauche du pixel courant p_{c1}, selon une direction horizontale;
- le huitième pixel p_{c8} de la partition P1 est prédit par rapport à deux pixels de référence dont l'un appartient à la partition de référence verticale PRV précitée et dont l'autre appartient à la partition de référence horizontale PRH d'un macrobloc voisin (non représenté), laquelle ayant été codée, puis décodée, comme expliqué précédemment: ces deux pixels de référence ont été déterminés comme étant respectivement le pixel de référence situé au voisinage le plus proche à gauche du pixel courant p_{c8}, selon une direction horizontale, et le pixel de référence situé au voisinage le plus proche juste au-dessus du pixel courant p_{c8}.

Une fois que tous les pixels de la partition P1 ont été prédits comme décrit ci-dessus, le module de calcul de prédiction PRED délivre une première partition prédite qui, dans le cas où celle-ci est retenue par le codeur CO comme étant le type de partition optimale, est immédiatement codée par le module de transformée et de quantification MTQ, puis décodée par le module MTQI de transformée et de quantification inverse. A l'issue de ces opérations, une partition de référence PR1 est obtenue, comme représenté à la figure 6B.

Le module de calcul de prédiction PRED parcourt ensuite de la gauche vers la droite une seconde ligne du macrobloc MBpart qui est destinée à être affectée à la prédiction de la seconde partition P2. La seconde ligne choisie est la quatrième ligne du macrobloc MBpart. Le module logiciel MA calcule alors, pour chaque pixel de ladite partition P2 à prédire, la fonction précitée qui détermine les deux pixels de référence situés au voisinage le plus proche du pixel courant à prédire.

La figure 6B représente les deux pixels de référence choisis dans le cas uniquement de la prédiction des premier, quatrième et septième pixels de la partition P2, ceci dans un souci de clarté du dessin.

On constate ainsi que :
- le premier pixel p_{c1} de la partition P2 est prédit par rapport à deux pixels de référence appartenant à la partition de référence verticale PRV précitée: ces deux pixels de référence ont été déterminés comme étant respectivement le pixel de référence situé au voisinage le plus proche du pixel courant p_{c1}, dans la direction diagonale supérieure gauche, et le pixel de référence situé au voisinage le plus proche à gauche du pixel courant p_{c1}, selon une direction horizontale;
- le quatrième pixel p_{c4} de la partition P2 est prédit par rapport à deux pixels de référence appartenant respectivement à la partition de référence verticale PRV et à la partition de référence horizontale PRH précitées: ces deux pixels de référence ont été déterminés comme étant respectivement le pixel de référence situé au voisinage le plus proche à gauche du pixel courant p_{c4}, selon une direction horizontale, et le pixel de référence situé au voisinage le plus proche juste au-dessus du pixel courant P_{c4};
- le septième pixel p_{c7} de la partition P2 est prédit par rapport à deux pixels de référence dont l'un appartient à la partition de référence verticale PRH précitée et dont l'autre appartient à la partition de référence PR1 précitée: ces deux pixels de référence ont été déterminés comme étant respectivement le pixel de référence situé au voisinage le plus proche juste au-dessus du pixel courant p_{c7} et le pixel de référence situé au voisinage le plus proche juste en-dessous du pixel courant p_{c7}.

Une fois que tous les pixels de la partition P2 ont été prédits comme décrit ci-dessus, le module de calcul de prédiction PRED délivre une deuxième partition prédite qui est immédiatement codée par le module de transformée et de quantification MTQ, puis décodée par le module MTQI de transformée et de quantification inverse. A l'issue de ces opérations, une partition de référence PR2 est obtenue, comme représenté à la figure 6C.

Le module de calcul de prédiction PRED parcourt ensuite de la gauche vers la droite une troisième ligne du macrobloc MBpart qui est destinée à être affectée à la prédiction de la troisième partition P3. La troisième ligne choisie est la deuxième ligne du macrobloc MBpart. Le module logiciel MA calcule alors, pour chaque pixel de ladite partition P3 à prédire, la fonction précitée qui détermine les deux pixels de référence situés au voisinage le plus proche du pixel courant à prédire.

La figure 6C représente les deux pixels de référence choisis dans le cas uniquement de la prédiction des premier, deuxième et quatrième pixels de la partition P3, ceci dans un souci de clarté du dessin.

On constate ainsi que :
- le premier pixel p_{c1} de la partition P3 est prédit par rapport à deux pixels de référence appartenant à la partition de référence verticale PRV précitée: ces deux pixels de référence ont été déterminés comme étant respectivement le pixel de référence situé au voisinage le plus proche du pixel courant p_{c1}, dans la direction diagonale supérieure gauche, et le pixel de référence situé au voisinage le plus proche à gauche du pixel courant p_{c1}, selon une direction horizontale;
- le deuxième pixel p_{c2} de la partition P3 est prédit par rapport à deux pixels de référence appartenant respectivement à la partition de référence verticale PRV et à la partition de référence horizontale PRH précitées: ces deux pixels de référence ont été déterminés comme étant respectivement le pixel de référence situé au voisinage le plus proche à gauche du pixel courant p_{c2}, selon une direction horizontale, et le pixel de référence situé au voisinage le plus proche juste au-dessus du pixel courant p_{c2};
- le quatrième pixel p_{c4} de la partition P3 est prédit par rapport à deux pixels de référence dont l'un appartient à la partition de référence verticale PRH précitée et dont l'autre appartient à la partition de référence PR2 précitée: ces deux pixels de référence ont été déterminés comme étant respectivement le pixel de référence situé au voisinage le plus proche juste au-dessus du pixel courant p_{c4} et le pixel de référence situé au voisinage le plus proche juste en-dessous du pixel courant p_{c4}.

Le module de calcul de prédiction PRED délivre une troisième partition prédite qui est immédiatement codée par le module de transformée et de quantification MTQ, puis décodée par le module MTQI de transformée et de quantification inverse. A l'issue de ces opérations, une partition de référence PR3 est obtenue (non représentée).

Les autres partitions P4 à P8 sont prédites de la même façon que décrite ci-dessus de façon à obtenir un macrobloc prédit MBpréd dont les partitions prédites PR5, PR3,..., PR2,..., PR8, PR1 se succèdent selon un ordre dichotomique qui est différent de l'ordre de propagation des partitions P1 à P8. Un tel macrobloc prédit est représenté figure 6D.

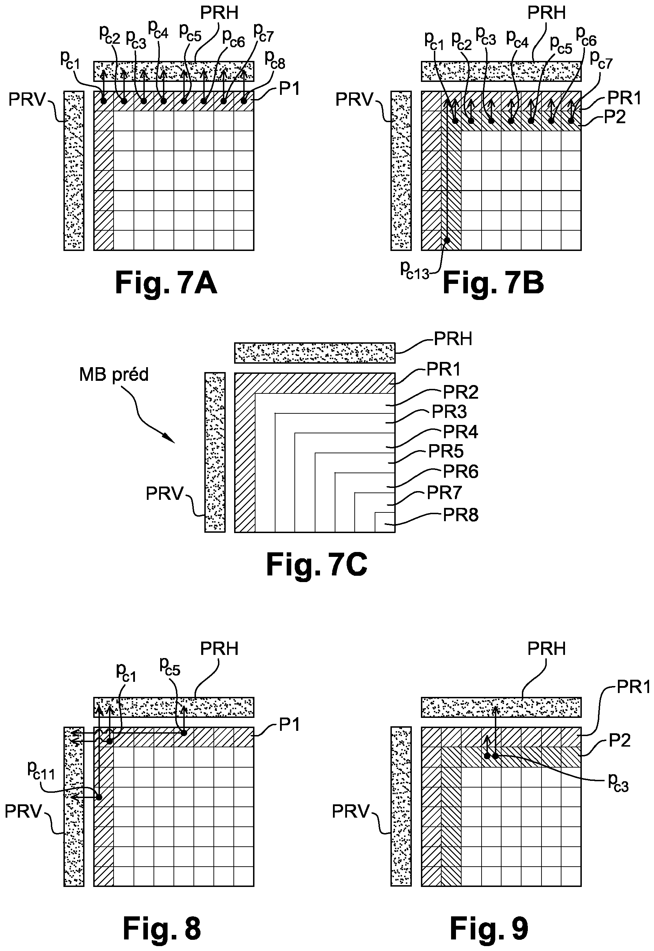

On va maintenant décrire, en référence à **la** **figure 7****,** un exemple de prédiction, qui est basé sur le critère de voisinage le plus proche qui vient d'être défini, auquel s'ajoute un critère directionnel de voisinage.

On suppose, dans cet exemple, que:
- chaque macrobloc partitionné MBpart à prédire est celui de la figure 4C, c'et à dire découpé en huit partitions P1,..., P8 ayant la forme de "L",
- le module de sélection d'ordre de parcours SOP de partitions a sélectionné un ordre de parcours qui correspond à l'ordre dans lequel les partitions P1 à P8 ont été propagées,
- la fonction mathématique, qui est destinée à être calculée par le module logiciel MA, est définie comme à la figure 5A, avec, pour chaque pixel à prédire :
   - un nombre de pixels de référence fixé cette fois systématiquement à un,
   - le pixel de référence devant être situé le premier au-dessus du pixel courant à prédire, dans la direction verticale.

Plus précisément, le module de calcul de prédiction PRED de **la** **figure** 2 parcourt la première partition P1 du macrobloc MBpart représenté figure 4C qui est destinée à être prédite. Le module logiciel MA calcule alors, pour chaque pixel de ladite partition P1 à prédire, une fonction qui détermine le pixel de référence qui est situé le premier au-dessus du pixel à prédire, dans la direction verticale.

Une telle fonction est calculée de la façon suivante.

Soit p(x,y) le pixel à prédire, p(x,y) appartenant à la partition pj courante, et |x| étant la valeur de mesure de la distance x qui sépare le pixel à prédire d'un pixel de référence. Le pixel de référence à utiliser est égal à p(x, y'), avec y' = argmin |y' - y| avec p(x,y') appartenant à pi, i<j.

La figure 7A représente le pixel de référence déterminé par la fonction mathématique précitée, dans le cas uniquement de la prédiction des huit premiers pixels p_{c1} à p_{c8} de la partition P1, ceci dans un souci de clarté du dessin.

On constate ainsi que les pixels p_{c1} à p_{c8} sont prédits respectivement par rapport à huit pixels de référence de la partition horizontale PRH qui leur sont immédiatement supérieurs, dans la direction verticale.

Une fois que tous les pixels de la partition P1 ont été prédits comme décrit ci-dessus, le module de calcul de prédiction PRED délivre une première partition prédite qui est immédiatement codée par le module de transformée et de quantification MTQ, puis décodée par le module MTQI de transformée et de quantification inverse. A l'issue de ces opérations, une partition de référence PR1 est obtenue, comme représenté à la figure 7B.

Le module de calcul de prédiction PRED parcourt ensuite la seconde partition du macrobloc MBpart destinée à être prédite. Le module logiciel MA calcule alors, pour chaque pixel de ladite partition P2 à prédire, une fonction qui détermine le pixel de référence qui est situé le premier au-dessus du pixel à prédire, dans la direction verticale.

La figure 7B représente le pixel de référence déterminé par la fonction mathématique précitée, dans le cas uniquement de la prédiction des sept premiers pixels p_{c1} à p_{c7} et du treizième pixel p_{c13} de la partition P2, ceci dans un souci de clarté du dessin.

On constate ainsi que les pixels p_{c1} à p_{c7} et p_{c13} sont prédits respectivement par rapport à huit pixels de référence de la partition de référence PR1 qui leur sont immédiatement supérieurs dans la direction verticale. En particulier, les pixels p_{c1} et p_{c13} sont prédits en utilisant le même pixel de référence.

Le module de calcul de prédiction PRED délivre une seconde partition prédite qui est immédiatement codée par le module de transformée et de quantification MTQ, puis décodée par le module MTQI de transformée et de quantification inverse. A l'issue de ces opérations, une partition de référence PR2 est obtenue (non représentée).

Les autres partitions P3 à P8 sont prédites de la même façon que décrite ci-dessus de façon à obtenir un macrobloc prédit MBpréd dont les partitions prédites PR1 à PR8 se succèdent dans l'ordre où les partitions P1 à P8 ont été propagées. Un tel macrobloc prédit est représenté figure 7C.

Dans une variante du mode de prédiction de **la** **figure 7**, la fonction mathématique précitée est paramétrée pour déterminer, pour chaque pixel à prédire, deux pixels de référence qui sont situés par rapport au pixel courant à prédire, respectivement selon deux directions prédéterminées, au lieu d'une seule.

Les deux pixels de référence à considérer sont par exemple :
- celui qui est situé le premier, à gauche du pixel courant à prédire, dans la direction horizontale,
- et celui qui est situé le premier au-dessus du pixel courant à prédire, dans la direction verticale.

Une telle variante est représentée à **la** **figure 8**, pour laquelle seule la prédiction de la première partition P1 est représentée.

**La** **figure 8** représente les pixels de référence déterminés par la fonction mathématique précitée, dans le cas uniquement de la prédiction des premier, cinquième et onzième pixels p_{ci}, p_{c5} et à p_{c11} de la partition P1, ceci dans un souci de clarté du dessin.

Dans une autre variante du mode de prédiction de **la** **figure 7**, la fonction mathématique précitée est paramétrée pour déterminer, pour chaque pixel à prédire, deux pixels de référence qui sont situés par rapport au pixel courant à prédire, selon une même direction prédéterminée.

Les deux pixels de référence à considérer sont par exemple :
- celui qui est situé le premier au-dessus du pixel courant à prédire, dans la direction verticale,
- et celui qui est situé le second au-dessus du pixel courant à prédire, dans la direction verticale.

Une telle variante est représentée à la figure 9, pour laquelle seule la prédiction de la seconde partition P2 est représentée.

**La** **figure 9** représente les pixels de référence déterminés par la fonction mathématique précitée, dans le cas uniquement de la prédiction du troisième pixel p_{c3} de la partition P2, ceci dans un souci de clarté du dessin.

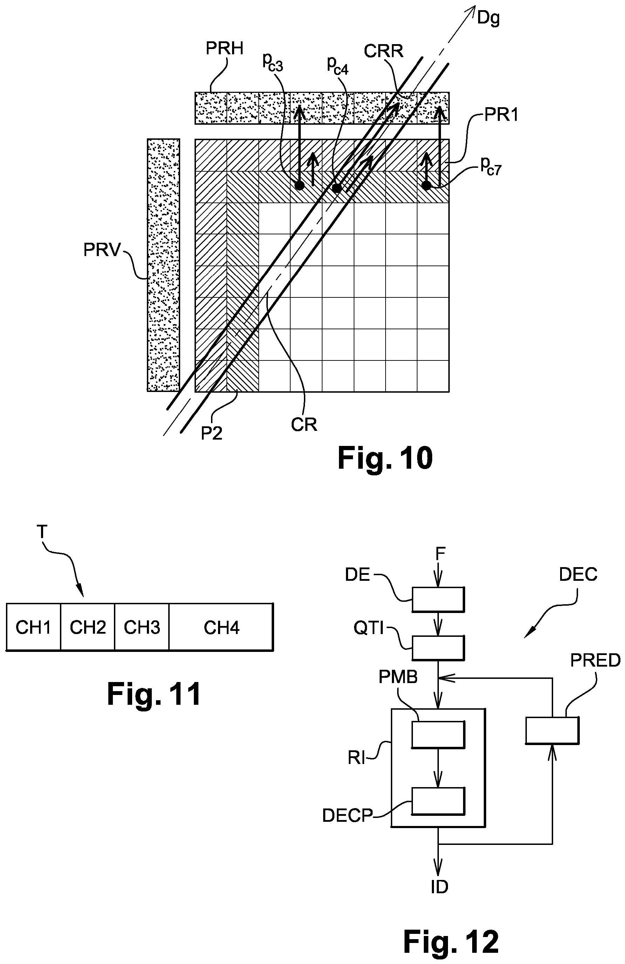

On va maintenant décrire, en référence à **la** **figure 10****,** un mode de prédiction adapté au cas où les partitions à prédire contiennent un contour CR qui prolonge un contour de référence CRR. En référence à **la** **figure 10****,** le contour CRR et son prolongement CR s'étendent par exemple selon une direction diagonale Dg.

Un tel contour est détecté de façon connue en soi par un algorithme de détection de contour.

On suppose, dans cet exemple, que:
- chaque macrobloc partitionné MBpart à prédire est celui de la figure 4C, c'est à dire découpé en huit partitions P1,..., P8 ayant la forme de "L",
- le module de sélection d'ordre de parcours SOP de partitions a sélectionné un ordre de parcours qui correspond à l'ordre dans lequel les partitions P1 à P8 ont été propagées,
- la fonction mathématique, qui est destinée à être calculée par le module logiciel MA, est paramétrée de façon à déterminer, pour chaque pixel à prédire :
   - un nombre de pixels de référence fixé par exemple à deux,
   - les pixels de référence devant être situés, par rapport au contour de référence CRR, dans la même position que celle du pixel à prédire par rapport au contour CR de la partition à prédire.

**La** **figure 10** représente les pixels de référence déterminés par la fonction mathématique précitée, dans le cas uniquement de la prédiction, s'agissant de la partition P2 :
- du troisième pixel p_{c3} qui est situé à gauche du contour CR,
- du quatrième pixel p_{c4} qui est situé sur le contour CR,
- et du septième pixel p_{c7} qui est situé à droite du contour CR,
ceci toujours dans un souci de clarté du dessin.

En référence à cette figure, les deux pixels de référence à utiliser pour prédire le pixel p_{c3} sont bien deux pixels disposés également à gauche du contour de référence CRR. Selon une variante, ces deux pixels peuvent être :
- celui qui est situé le premier au-dessus du pixel courant à prédire, dans la direction verticale (quatrième pixel horizontal de PR1),
- et celui qui est situé le second au-dessus du pixel courant à prédire, dans la direction verticale (quatrième pixel horizontal de PRH).

Toujours en référence à **la** **figure 10****,** les deux pixels de référence à utiliser pour prédire le pixel p_{c4} sont bien deux pixels disposés également sur le contour de référence CRR. Selon une variante, ces deux pixels peuvent être :
- celui qui est situé le premier au-dessus du pixel courant à prédire, dans la direction diagonale Dg (sixième pixel horizontal de PR1),
- et celui qui est situé le second au-dessus du pixel courant à prédire, dans la direction diagonale Dg (septième pixel horizontal de PRH).

Toujours en référence à **la** **figure 10****,** les deux pixels de référence à utiliser pour prédire le pixel p_{c7} sont bien deux pixels disposés également à droite du contour de référence CRR. Selon une variante, ces deux pixels peuvent être :
- celui qui est situé le premier au-dessus du pixel courant à prédire, dans la direction verticale (septième pixel horizontal de PR1),
- et celui qui est situé le second au-dessus du pixel courant à prédire, dans la direction verticale (septième pixel horizontal de PRH).

Ainsi, conformément aux exemples de modes de prédiction qui viennent d'être décrits en référence **aux** **figures 6 à 10****,** on comprend que la fonction qui est calculée par le module logiciel MA constitue en d'autres termes une règle qui permet de déterminer, pour un type de partitionnement donné d'un macrobloc à prédire (bloc carré, lignes, "L", etc...), une famille particulière de pixels de référence.

De façon particulièrement avantageuse, une telle règle est ajustable selon le type de partitionnement sélectionné, selon le degré de précision de la prédiction que l'on souhaite ou bien encore selon le nombre de pixels de référence disponibles, selon la présence de contours, etc..., grâce notamment aux multiples caractéristiques qui la définissent (disposition du ou des pixels de référence par rapport au pixel à prédire, disposition du ou des pixels de référence dans une direction donnée, disposition du ou des pixels de référence par rapport à un contour qui se prolonge dans la partition à prédire, etc...).

Une fois différentes prédictions possibles calculées par le module de calcul de prédiction PRED, au cours d'une étape C5 représentée à **la** **figure 1**, un module de décision DCN, représenté à **la** **figure 2****,** parcourt les macroblocs partitionnés de l'image IE et choisit, dans cette étape C5, le mode de prédiction utilisé pour coder chacun de ces macroblocs. Parmi les prédictions possibles pour un macrobloc, le module de décision DCN choisit la prédiction optimale selon un critère débit distorsion bien connu de l'homme du métier.

Pour un macrobloc MB courant à coder, le module de décision DCN met par exemple en compétition les modes de prédiction représentés sur les **figures 7** et **8****.**

Chaque macrobloc prédit MBpréd est codé, au cours d'une étape C6, comme dans la norme H.264/MPEG-4 AVC. Plus précisément en référence à **la** **figure 11****,** où une tranche T de macrobloc codé de l'image IE est représentée, chaque macrobloc codé comporte un champ CH1 précisant le type de codage du macrobloc MB considéré, Intra dans le cas du mode de réalisation représenté, un champ CH2 indiquant la forme de la partition sélectionnée (carrée, ligne, colonne, croix, "L", etc...), un champ CH3 indiquant la fonction de prédiction utilisée, et un champ CH4 codant les valeurs des résidus du macrobloc prédit MBpréd.

Une fois ce codage structurel effectué par le module de décision DCN, les coefficients de résidus s'ils existent, correspondants aux blocs de l'image IE, sont envoyés au module MTQ de transformée et de quantification, pour subir des transformées en cosinus discrètes puis une quantification. Les tranches de macroblocs avec ces coefficients quantifiés sont ensuite transmises au module CE de codage entropique, pour produire, avec les autres images de la séquence vidéo déjà codées de la même façon que l'image IE, un flux vidéo F, binaire, codé selon l'invention.

Le flux binaire F ainsi codé est transmis par un réseau de communication, à un terminal distant. Celui-ci comporte un décodeur DEC selon l'invention, représenté à la **figure 12****.**

Le flux binaire F est d'abord envoyé à un module DE de décodage entropique, décodage inverse de celui effectué par le module de codage entropique CE représenté à **la** **figure 2****.** Puis, pour chaque macrobloc d'image à reconstruire, les coefficients décodés par le module DE sont envoyés à un module QTI de quantification inverse et de transformée inverse.

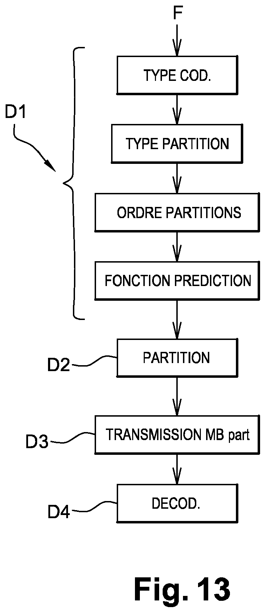

Un module RI de reconstruction d'image reçoit alors des données décodées correspondant aux données produites par le module DCN **(****figure 2****)** à l'étape C5 de codage selon l'invention, aux erreurs de transmission près. Le module RI met en oeuvre des étapes D1 à D4 du procédé de décodage selon l'invention, telle que représentées à la **figure 13****.**

La première étape D1 est le décodage de structures de données codées dans une tranche T d'un macrobloc courant de l'image IE à décoder. De façon connue en soi, le module de reconstruction RI détermine dans le champ CH1 (**figure 11**) que les données de la tranche T ont subi un codage de type Intra.

Au cours de cette même étape, le module de reconstruction RI détermine, conformément au procédé de décodage selon l'invention :
- la forme de la partition initiale P1 à reconstruire, grâce au champ CH2 (figure 7),
- la fonction de prédiction sélectionnée par le module de décision DCN (**figure 2**), grâce au champ CH3.

Si par exemple, la partition initiale P1 a la forme d'un "L" comme représenté figure 4C et que la fonction de prédiction optimale est celle qui permet d'effectuer la prédiction représentée **figure 7**, le module de reconstruction RI en déduit l'ordre dans lequel vont être décodées les différentes partitions P1 à P8 du macrobloc courant et la fonction de prédiction associée à chaque partition. Une telle déduction est par exemple effectuée au moyen d'une table de correspondance (non représentée) qui est mémorisée dans le décodeur DEC.

L'étape suivante D2 représentée à **la** **figure 13** est le découpage du macrobloc courant à décoder, à partir de la partition initiale P1 déterminée à l'étape D1, en une pluralité de n partitions P1, P2,..., Pn. Ce partitionnement est effectué par un module PMB de partitionnement de macroblocs qui ressemble en tous points à celui représenté à **la** **figure 2**.

A la suite de l'étape de partitionnement D2, au cours d'une étape D3 représentée à **la** **figure 13**, le module de partitionnement PMB transmet le macrobloc courant à décoder et qui vient d'être partitionné en n partitions, à un module de décodage de partitions DECP représenté à **la** **figure 12**.

Au cours d'une étape D4 représentée à **la** **figure 13**, le module DECP effectue alors un décodage des n partitions selon l'ordre de décodage et la fonction de prédiction qui ont été déterminés à l'étape D1.

A cet effet, pour chaque partition à décoder d'un macrobloc courant à décoder, le module de décodage DECP utilise des valeurs de prédiction du ou des partitions immédiatement précédentes qui sont fournies par le module PRED de calcul de prédiction, représenté sur la **figure 13****.**

Le module PRED de calcul de prédiction reçoit en effet les valeurs des partitions précédemment décodées par le module de reconstruction RI, valeurs qu'il garde en mémoire.

Les n partitions d'un macrobloc de l'image IE sont décodées en utilisant la prédiction spatiale Intra indiqué dans le champ CH1 représenté à **la** **figure 11****.**

Une fois tous les macroblocs de l'image IE décodés, le module RI de reconstruction d'image fournit en sortie du décodeur DEC, une image ID correspondant au décodage de l'image IE.

## Revendications

1. Procédé de prédiction de partitions d'au moins un groupe de pixels dans une image (IE) à coder, par rapport à un groupe de pixels de référence, le groupe de pixels étant au préalable découpé en une pluralité de partitions ne se chevauchant pas, une partition courante à prédire étant prédite en référence à au moins une partition qui la précède immédiatement et qui a été codée puis décodée, le procédé étant **caractérisé en ce que** le groupe de pixels de référence est obtenu par calcul d'une fonction paramétrée selon un mode de prédiction prédéterminé, les pixels de référence dudit groupe obtenu appartenant à au moins une partition différente de la partition courante et étant susceptibles de varier d'une partition à l'autre, et **en ce que** pour chaque pixel d'une partition courante à prédire, ladite fonction détermine, à partir d'un ensemble de pixels de référence susceptibles d'être sélectionnés pour prédire le pixel considéré conformément au mode de prédiction prédéterminé, au moins deux pixels de référence tels que la distance qui sépare chacun d'eux du pixel considéré est la plus faible en comparaison des distances qui ont été estimées pour les autres pixels de référence de l'ensemble.

2. Procédé de prédiction selon la revendication 1, dans lequel lorsqu'une partition à prédire contient un contour qui prolonge un contour de référence contenu dans un groupe de pixels de référence, un mode de prédiction est défini par le choix, pour au moins un pixel à prédire situé dans une position déterminée par rapport au contour de ladite partition à prédire, d'au moins un pixel de référence situé dans la même position que ledit pixel à prédire, par rapport au contour de référence.

3. Procédé de prédiction selon la revendication 1 ou 2, dans lequel un mode de prédiction est défini par le choix, pour au moins un pixel d'une partition à prédire, d'au moins un pixel de référence qui sépare le pixel à prédire d'une distance prédéterminée.

4. Procédé de prédiction selon la revendication 3, dans lequel la distance prédéterminée est minimisée de façon à ce que les pixels de référence dudit groupe soient situés au voisinage le plus proche dudit pixel à prédire.

5. Procédé de prédiction selon l'une quelconque des revendications 1 à 4, dans lequel un mode de prédiction est défini par le choix, pour au moins un pixel d'une partition à prédire, d'au moins un pixel de référence situé dans une direction prédéterminée, par rapport au pixel à prédire.

6. Procédé de codage d'une image ou d'une séquence d'images générant un flux (F) de données comportant des données représentatives d'au moins un groupe de pixels dans une desdites images (IE), ledit procédé comprenant les étapes de :
- découpage dudit groupe de pixels en une pluralité de partitions,
- prédiction desdites partitions,
ledit procédé étant **caractérisé en ce que** ladite étape de prédiction est effectuée conformément au procédé selon l'une quelconque des revendications 1 à 5.

7. Procédé de décodage d'un flux (F) de données représentatif d'une image ou d'une séquence d'images, ledit flux (F) comportant des données représentatives d'au moins un groupe de pixels dans une desdites images (IE), ledit procédé comprenant les étapes de :
- découpage dudit groupe de pixels en une pluralité de partitions,
- prédiction desdites partitions,
ledit procédé étant **caractérisé en ce que** ladite étape de prédiction est effectuée conformément au procédé selon l'une quelconque des revendications 1 à 5.

8. Signal porteur d'un flux (F) de données représentatif d'une image ou d'une séquence d'images, ledit flux (F) comportant des données représentatives d'au moins un groupe de pixels dans une desdites images (IE), certaines desdites données étant des données de prédiction de partitions dudit groupe de pixels par rapport à un groupe de pixels de référence, le groupe de pixels étant au préalable découpé en une pluralité de partitions ne se chevauchant pas, une partition courante à prédire étant prédite en référence à au moins une partition qui la précède immédiatement et qui a été codée puis décodée, ledit signal étant **caractérisé en ce que** lesdites données de prédiction sont relatives à une fonction paramétrée selon un mode de prédiction prédéterminé qui permet d'obtenir ledit groupe de pixels de référence, lesdits pixels de référence dudit groupe appartenant à au moins une partition différente de la partition courante et étant susceptibles de varier d'une partition à l'autre, et **en ce que** pour chaque pixel d'une partition courante à prédire, ladite fonction détermine, à partir d'un ensemble de pixels de référence susceptibles d'être sélectionnés pour prédire le pixel considéré conformément au mode de prédiction prédéterminé, au moins deux pixels de référence tels que la distance qui sépare chacun d'eux du pixel considéré est la plus faible en comparaison des distances qui ont été estimées pour les autres pixels de référence de l'ensemble,

9. Dispositif de prédiction de partitions d'au moins un groupe de pixels dans une image (IE) à coder, par rapport à un groupe de pixels de référence, le groupe de pixels étant au préalable découpé en une pluralité de partitions ne se chevauchant pas, une partition courante à prédire étant prédite en référence à au moins une partition qui la précède immédiatement et qui a été codée puis décodée, **caractérisé en ce que** le dispositif comprend des moyens de calcul d'une fonction paramétrée selon un mode de prédiction prédéterminé pour obtenir ledit groupe de pixels de référence, lesdits pixels de référence dudit groupe appartenant à au moins une partition différente de la partition courante et étant susceptibles de varier d'une partition à l'autre, et **en ce que** pour chaque pixel d'une partition courante à prédire, ladite fonction détermine, à partir d'un ensemble de pixels de référence susceptibles d'être sélectionnés pour prédire le pixel considéré conformément au mode de prédiction prédéterminé, au moins deux pixels de référence tels que la distance qui sépare chacun d'eux du pixel considéré est la plus faible en comparaison des distances qui ont été estimées pour les autres pixels de référence de l'ensemble.

10. Dispositif de codage (CO) d'une image ou d'une séquence d'images générant un flux (F) de données comportant des données représentatives d'au moins un groupe de pixels dans une desdites images (IE), ledit dispositif comprenant :
- des moyens de découpage dudit groupe de pixels en une pluralité de partitions,
- des moyens de prédiction desdites partitions,
ledit dispositif étant **caractérisé en ce que** les moyens de prédiction sont contenus dans un dispositif de prédiction conforme au dispositif selon la revendication 9.

11. Dispositif (DEC) de décodage d'un flux (F) de données représentatif d'une image ou d'une séquence d'images, ledit flux (F) comportant des données représentatives d'au moins un groupe de pixels dans une desdites images (IE), ledit dispositif comprenant :
- des moyens de découpage dudit groupe de pixels en une pluralité de partitions,
- des moyens de prédiction desdites partitions,
ledit dispositif étant **caractérisé en ce que** les moyens de prédiction sont contenus dans un dispositif de prédiction conforme au dispositif selon la revendication 9.

12. Programme d'ordinateur comportant des instructions pour mettre en oeuvre l'un des procédés selon l'une quelconque des revendications 1 à 7, lorsqu'il est exécuté sur un ordinateur.

## Patentansprüche

1. Verfahren zum Vorhersagen von Partitionen von mindestens einer Gruppe von Pixeln in einem zu codierenden Bild (IE) in Bezug auf eine Gruppe von Referenzpixeln, wobei die Gruppe von Pixeln zuvor in mehrere Partitionen unterteilt wird, die sich nicht überlappen, wobei eine aktuelle vorherzusagende Partition unter Bezugnahme auf mindestens eine Partition vorhergesagt wird, die ihr unmittelbar vorausgeht und die codiert und dann decodiert worden ist, wobei das Verfahren **dadurch gekennzeichnet ist, dass** die Gruppe von Referenzpixeln durch Berechnen einer Funktion erhalten wird, die nach einem vorbestimmten Vorhersagemodus parametrisiert wird, wobei die erhaltenen Referenzpixel zu mindestens einer Partition gehören, die von der aktuellen Partition verschieden ist, und geeignet sind, von einer Partition zur anderen zu variieren, und dadurch, dass die Funktion für jedes Pixel einer vorherzusagenden aktuellen Partition, ausgehend von einem Satz von Referenzpixeln, die geeignet sind, ausgewählt zu werden, um das betreffende Pixel gemäß dem vorbestimmten Vorhersagemodus vorherzusagen, mindestens zwei Referenzpixel bestimmt, die derart sind, dass der Abstand, der jedes von ihnen von dem betreffenden Pixel trennt, der kleinste im Vergleich zu den Abständen ist, die für die anderen Referenzpixel des Satzes geschätzt worden sind.

2. Verfahren zum Vorhersagen nach Anspruch 1, wobei, wenn eine vorherzusagende Partition eine Kontur enthält, die eine Referenzkontur verlängert, die in einer Gruppe von Referenzpixeln enthalten ist, ein Vorhersagemodus durch die Wahl für mindestens ein vorherzusagendes Pixel, das in einer vorbestimmten Position in Bezug auf die Kontur der vorherzusagenden Partition angeordnet ist, von mindestens einem Referenzpixel definiert wird, das in derselben Position wie das vorherzusagende Pixel in Bezug auf die Referenzkontur angeordnet ist.

3. Verfahren zum Vorhersagen nach Anspruch 1 oder 2, wobei ein Vorhersagemodus durch die Wahl für mindestens ein Pixel einer vorherzusagenden Partition, von mindestens einem Referenzpixel definiert wird, das das vorherzusagende Pixel um einen vorbestimmten Abstand trennt.

4. Verfahren zum Vorhersagen nach Anspruch 3, wobei der vorbestimmte Abstand derart minimiert wird, dass die Referenzpixel der Gruppe in der Nähe des Pixels, das dem vorherzusagenden Pixel am nächsten ist, angeordnet sind.

5. Verfahren zum Vorhersagen nach einem der Ansprüche 1 bis 4, wobei ein Vorhersagemodus durch die Wahl für mindestens ein Pixel einer vorherzusagenden Partition von mindestens einem Referenzpixel definiert wird, das in einer vorbestimmten Richtung in Bezug auf das zu vorhersagende Pixel angeordnet ist.

6. Verfahren zum Codieren eines Bildes oder einer Abfolge von Bildern, wodurch ein Strom (F) von Daten erzeugt wird, der Daten aufweist, die für mindestens eine Gruppe von Pixeln in einem der Bilder (IE) repräsentativ sind, wobei das Verfahren die Schritte aufweist des:
- Unterteilens der Gruppe von Pixeln in mehrere Partitionen,
- Vorhersagens der Partitionen,
wobei das Verfahren **dadurch gekennzeichnet ist, dass** der Schritt des Vorhersagens gemäß dem Verfahren nach einem der Ansprüche 1 bis 5 durchgeführt wird.

7. Verfahren zum Decodieren eines Stroms (F) von Daten, der für ein Bild oder ein Abfolge von Bildern repräsentativ ist, wobei der Strom (F) Daten aufweist, die für mindestens eine Gruppe von Pixeln in einem der Bilder (IE) repräsentativ sind, wobei das Verfahren die Schritte aufweist des:
- Unterteilens der Gruppe von Pixeln in mehrere Partitionen,
- Vorhersagens der Partitionen,
wobei das Verfahren **dadurch gekennzeichnet ist, dass** der Schritt des Vorhersagens gemäß dem Verfahren nach einem der Ansprüche 1 bis 5 durchgeführt wird.

8. Trägersignal eines Stroms (F) von Daten, der für ein Bild oder ein Abfolge von Bildern repräsentativ ist, wobei der Strom (F) Daten aufweist, die für mindestens eine Gruppe von Pixeln in einem der Bilder (IE) repräsentativ sind, wobei bestimmte der Daten Daten zum Vorhersagen von Partitionen der Gruppe von Pixeln in Bezug auf eine Gruppe von Referenzpixeln sind, wobei die Gruppe von Pixeln zuvor in mehrere Partitionen unterteilt ist, die sich nicht überlappen, wobei eine aktuelle vorherzusagende Partition unter Bezugnahme auf mindestens eine Partition vorhergesagt ist, die ihr unmittelbar vorausgeht und die codiert und dann decodiert worden ist, wobei das Signal **dadurch gekennzeichnet ist, dass** sich die Daten zum Vorhersagen auf eine Funktion beziehen, die nach einem vorbestimmten Vorhersagemodus parametrisiert ist, der ermöglicht, die Gruppe von Referenzpixeln zu erhalten, wobei die Referenzpixel der Gruppe zu mindestens einer Partition gehören, die von der aktuellen Partition verschieden ist, und geeignet sind, von einer Partition zur anderen zu variieren, und dadurch, dass die Funktion für jedes Pixel einer vorherzusagenden aktuellen Partition ausgehend von einem Satz von Referenzpixeln, die geeignet sind, ausgewählt zu werden, um das betreffende Pixel gemäß dem vorbestimmten Vorhersagemodus vorherzusagen, mindestens zwei Referenzpixel bestimmt, die derart sind, dass der Abstand, der jedes von ihnen von dem betreffenden Pixel trennt, der kleinste im Vergleich zu den Abständen ist, die für die anderen Referenzpixel des Satzes geschätzt worden sind.

9. Vorrichtung zum Vorhersagen von Partitionen von mindestens einer Gruppe von Pixeln in einem zu codierenden Bild (IE) in Bezug auf eine Gruppe von Referenzpixeln, wobei die Gruppe von Pixeln zuvor in mehrere Partitionen unterteilt ist, die sich nicht überlappen, wobei eine aktuelle vorherzusagende Partition unter Bezugnahme auf mindestens eine Partition vorhergesagt ist, die ihr unmittelbar vorausgeht und die codiert und dann decodiert worden ist, **dadurch gekennzeichnet, dass** die Vorrichtung Mittel zum Berechnen von einer Funktion aufweist, die nach einem vorbestimmten Vorhersagemodus parametrisiert ist, um die Gruppe von Referenzpixeln zu erhalten, wobei die Referenzpixel der Gruppe zu mindestens einer Partition gehören, die von der aktuellen Partition verschieden ist, und geeignet sind, von einer Partition zur anderen zu variieren, und dadurch, dass die Funktion für jedes Pixel einer vorherzusagenden aktuellen Partition ausgehend von einem Satz von Referenzpixeln, die geeignet sind, ausgewählt zu werden, um das betreffende Pixel gemäß dem vorbestimmten Vorhersagemodus vorherzusagen, mindestens zwei Referenzpixel bestimmt, die derart sind, dass der Abstand, der jedes von ihnen von dem betreffenden Pixel trennt, der kleinste im Vergleich zu den Abständen ist, die für die anderen Referenzpixel des Satzes geschätzt worden sind.

10. Vorrichtung zum Codieren (CO) eines Bildes oder einer Abfolge von Bildern, wodurch ein Strom (F) von Daten erzeugt wird, der Daten aufweist, die für mindestens eine Gruppe von Pixeln in einem der Bilder (IE) repräsentativ sind, wobei die Vorrichtung aufweist:
- Mittel zum Unterteilen der Gruppe von Pixeln in mehrere Partitionen,
- Mittel zum Vorhersagen der Partitionen,
wobei die Vorrichtung **dadurch gekennzeichnet ist, dass** die Mittel zum Vorhersagen in einer Vorrichtung zum Vorhersagen enthalten sind, die der Vorrichtung gemäß Anspruch 9 entspricht.

11. Vorrichtung (DEC) zum Decodieren eines Stroms (F) von Daten, der für ein Bild oder ein Abfolge von Bildern repräsentativ ist, wobei der Strom (F) Daten aufweist, die für mindestens eine Gruppe von Pixeln in einem der Bilder (IE) repräsentativ sind, wobei die Vorrichtung aufweist:
- Mittel zum Unterteilen der Gruppe von Pixeln in mehrere Partitionen,
- Mittel zum Vorhersagen der Partitionen,
wobei die Vorrichtung **dadurch gekennzeichnet ist, dass** die Mittel zum Vorhersagen in einer Vorrichtung zum Vorhersagen enthalten sind, die der Vorrichtung gemäß Anspruch 9 entspricht.

12. Computerprogramm, das Anweisungen aufweist, um eines der Verfahren nach einem der Ansprüche 1 bis 7 umzusetzen, wenn das Programm auf einem Computer ausgeführt wird.

## Claims

1. Method for predicting partitions of at least one group of pixels in an image (IE) to be coded, with respect to a group of reference pixels, the group of pixels being split beforehand into a plurality of non-overlapping partitions, a current partition to be predicted being predicted with reference to at least one partition that immediately precedes it and that has been coded and then decoded, the method being **characterized in that** the group of reference pixels is obtained by calculating a function parametrized according to a predetermined mode of prediction, the reference pixels of said group obtained belonging to at least one partition different from the current partition and being able to vary from one partition to another, and **in that**, for each pixel of a current partition to be predicted, said function determines, from a set of reference pixels able to be selected in order to predict the pixel under consideration in accordance with the predetermined mode of prediction, at least two reference pixels such that the distance that separates each of them from the pixel under consideration is the shortest in comparison with the distances that have been estimated for the other reference pixels of the set.

2. Prediction method according to Claim 1, in which when a partition to be predicted contains a contour which prolongs a reference contour contained in a group of reference pixels, a mode of prediction is defined by the choice, for at least one pixel to be predicted situated in a determined position with respect to the contour of said partition to be predicted, of at least one reference pixel situated in the same position as said pixel to be predicted, with respect to the reference contour.

3. Prediction method according to Claim 1 or 2, in which a mode of prediction is defined by the choice, for at least one pixel of a partition to be predicted, of at least one reference pixel which separates the pixel to be predicted by a predetermined distance.

4. Prediction method according to Claim 3, in which the predetermined distance is minimized in such a way that the reference pixels of said group are situated in the neighborhood closest to said pixel to be predicted.

5. Prediction method according to any one of Claims 1 to 4, in which a mode of prediction is defined by the choice, for at least one pixel of a partition to be predicted, of at least one reference pixel situated in a predetermined direction, with respect to the pixel to be predicted.

6. Method for coding an image or a sequence of images generating a data stream (F) comprising data representative of at least one group of pixels in one of said images (IE), said method comprising the steps of:
- splitting said group of pixels into a plurality of partitions,
- predicting said partitions,
said method being **characterized in that** said prediction step is performed in accordance with the method according to any one of Claims 1 to 5.

7. Method for decoding a data stream (F) representative of an image or of a sequence of images, said stream (F) comprising data representative of at least one group of pixels in one of said images (IE), said method comprising the steps of:
- splitting said group of pixels into a plurality of partitions,
- predicting said partitions,
said method being **characterized in that** said prediction step is performed in accordance with the method according to any one of Claims 1 to 5.

8. Carrier signal bearing a data stream (F) representative of an image or of a sequence of images, said stream (F) comprising data representative of at least one group of pixels in one of said images (IE), some of said data being prediction data for partitions of said group of pixels with respect to a group of reference pixels, the group of pixels being split beforehand into a plurality of non-overlapping partitions, a current partition to be predicted being predicted with reference to at least one partition that immediately precedes it and that has been coded and then decoded, said signal being **characterized in that** said prediction data relate to a function parametrized according to a predetermined mode of prediction which makes it possible to obtain said group of reference pixels, said reference pixels of said group belonging to at least one partition different from the current partition and being able to vary from one partition to another, and **in that**, for each pixel of a current partition to be predicted, said function determines, from a set of reference pixels able to be selected in order to predict the pixel under consideration in accordance with the predetermined mode of prediction, at least two reference pixels such that the distance that separates each of them from the pixel under consideration is the shortest in comparison with the distances that have been estimated for the other reference pixels of the set.

9. Device for predicting partitions of at least one group of pixels in an image (IE) to be coded, with respect to a group of reference pixels, the group of pixels being split beforehand into a plurality of non-overlapping partitions, a current partition to be predicted being predicted with reference to at least one partition that immediately precedes it and that has been coded and then decoded, **characterized in that** the device comprises means for calculating a function parametrized according to a predetermined mode of prediction to obtain said group of reference pixels, said reference pixels of said group belonging to at least one partition different from the current partition and being able to vary from one partition to another, and **in that**, for each pixel of a current partition to be predicted, said function determines, from a set of reference pixels able to be selected in order to predict the pixel under consideration in accordance with the predetermined mode of prediction, at least two reference pixels such that the distance that separates each of them from the pixel under consideration is the shortest in comparison with the distances that have been estimated for the other reference pixels of the set.

10. Device (CO) for coding an image or a sequence of images generating a data stream (F) comprising data representative of at least one group of pixels in one of said images (IE), said device comprising:
- means for splitting said group of pixels into a plurality of partitions,
- means for predicting said partitions,
said device being **characterized in that** the prediction means are contained in a prediction device in accordance with the device according to Claim 9.

11. Device (DEC) for decoding a data stream (F) representative of an image or of a sequence of images, said stream (F) comprising data representative of at least one group of pixels in one of said images (IE), said device comprising:
- means for splitting said group of pixels into a plurality of partitions,
- means for predicting said partitions,
said device being **characterized in that** the prediction means are contained in a prediction device in accordance with the device according to Claim 9.

12. Computer program comprising instructions for implementing one of the methods according to any one of Claims 1 to 7, when it is executed on a computer.
